# EUROPÄISCHE PATENTSCHRIFT

(11) **EP 4 479 596 B1**
(45) Veröffentlichungstag und Bekanntmachung des Hinweises auf die Patenterteilung: **01.10.2025**
(21) Anmeldenummer: 23707654.2
(22) Anmeldetag: 16.02.2023
(51) Int. Cl.: E02F 3/36

(54) **DREHVORRICHTUNG**
ROTATING APPARATUS
APPAREIL ROTATIF

(30) Priorität: 16.02.2022 DE 102022103669
(43) Veröffentlichungstag der Anmeldung: 25.12.2024
(73) Patentinhaber: Holp GmbH, 71540 Murrhardt (DE)
(72) Erfinder: HOLP, Günter, 71540 Murrhardt (DE)
(74) Vertreter: Pfiz, Thomas
(86) Internationale Anmeldenummer: PCT/EP2023/053886
(87) Internationale Veröffentlichungsnummer: WO 2023/156518

(56) Entgegenhaltungen:
- WO-A1-2013/025141
- WO-A2-2011/128427
- DE-A1- 3 146 693
- DE-B3- 102020 127 313
- SE-B- 464 644

## Beschreibung

Die Erfindung betrifft eine Drehvorrichtung zur Drehpositionierung eines Arbeitsgeräts an einem Ausleger einer Arbeitsmaschine, insbesondere eines Baggers, gemäß dem Oberbegriff des Patentanspruchs 1.

Eine derartige Drehvorrichtung ist aus der WO 2011/128427 A2 bekannt. Dort wird eine Drehdurchführung zur Durchleitung eines Druckmediums über mindestens einen Medienkanal beschrieben. Die Drehvorrichtung kann mit einem innen liegenden Momentgetriebe arbeiten, das eine endlose Drehung des montierten Anbaugeräts ermöglicht.

Überlastungen, unabhängig ob einmalig auftretend oder schleichend durch häufigere geringere Belastungen, können bei Drehvorrichtungen an Arbeitsmaschinen zu einem Lagerversagen führen. Die Folge dieses Versagens sind neben erheblichen Materialschäden unter Umständen auch der unkontrollierte Verlust des Anbaugeräts, was im schlimmsten Fall mit erheblichen Personenschäden verbunden sein kann.

Ausgehend hiervon liegt der Erfindung die Aufgabe zugrunde, die im Stand der Technik bekannten Vorrichtungen weiter zu verbessern und mit einfachen Mitteln Schäden durch Überlastungen zuverlässig zu verringern oder zu verhindern, ohne den normalen Arbeitsbetrieb zu beeinträchtigen.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, eine zusätzliche Sicherung des Arbeitsgeräts redundante über mechanische Bauteile zu schaffen. Dementsprechend wird erfindungsgemäß eine Sicherungseinrichtung gegen ein ungewolltes Lösen des Flanschteils vorgeschlagen, welche mindestens ein bei Unterschreiten eines Spiels für die Drehbewegung selbsttätig mit dem Flanschteil oder einem Teil des Drehantriebs mechanisch in Eingriff kommendes Rückhalteelement aufweist. Auf diese Weise kann ausgehend von einer maschinenfesten Baugruppe der Kraftfluss im Versagensfall umgeleitet werden. Im Normalzustand, bei Aufrechterhaltung des Spiels für die Drehbewegung gegenüber dem mindestens einen Rückhalteelement, wird hingegen die normale Drehbewegung nicht behindert. Dabei kann auch eine bestimmte, punktuelle Überlastung außerhalb der Drehbewegung ermöglicht bzw. erlaubt werden, ohne zusätzliche Risiken einzugehen. Die Sicherungseinrichtung kann dann auch dazu dienen, einen Getriebeschaden bspw. in Form eines Zahnbruchs zu verhindern.

Vorteilhafterweise besitzt das Rückhaltelement einen an dem Anbauteil fixierten Grundkörper, so dass eine maschinenfeste Basis für die Kraftaufnahme im Sicherungsfall geschaffen wird.

Vorteilhafterweise besitzt das Rückhaltelement ein in Richtung der Drehachse abstützendes Formschlussteil. Dabei stützt das Formschlussteil des Rückhaltelements das Flanschteil bzw. ein daran angebrachtes Bauteil zu dem Anbauteil hin formschlüssig ab und sichert es gegen Abreißen oder Abfallen unter Schwerkrafteinfluss.

Eine weitere vorteilhafte Ausgestaltung sieht vor, dass das Formschlussteil formschlüssig in eine Kontur des Flanschteils oder ein mit dem Flanschteil fest verbundenes Bauteil eingreift. Letzteres kann zweckmäßig auch durch ein Teil des Drehantriebs, beispielsweise in Form eines Schneckenrads, ausgeführt sein.

Um auch hohe Kräfte zuverlässig aufnehmen zu können, ist es vorteilhaft, wenn das Rückhaltelement einen das Flanschteil an einer Außenkontur umgreifenden Fanghaken aufweist.

Eine weitere Verbesserung sieht vor, dass mehrere Rückhalteelemente im Winkelabstand zueinander um die Drehachse des Flanschteils herum verteilt angeordnet sind. Denkbar ist es auch, ein einzelnes umlaufend wirkendes Rückhalteelement vorzusehen.

Eine selbsttätige Auslösung ohne zusätzliche Steuerungen lässt sich dadurch schaffen, dass das mindestens eine Rückhaltelement bei Unterschreiten des Drehspiels infolge elastischer Verformung des Aufbaus unter Last aus einer Freigabestellung in eine die Drehbewegung bremsende Reibstellung gelangt oder bei Bruch interner Verbindungselemente das Flanschteil und das damit fest verbundene Arbeitsgerät formschlüssig festhält.

In diesem Zusammenhang ist es auch günstig, wenn das mindestens eine Rückhaltelement einen gesondert aufgebrachten Bremsbelag aufweist. Ein solcher Bremsbelag kann auch eine reinigende Wirkung im Bereich der Eingriffsflächen entfalten.

Um eine graduelle Sicherung abhängig von der Belastung zu ermöglichen, ist es von Vorteil, wenn das Flanschteil über Verbindungsmittel axial an dem Drehantrieb gehalten ist, und wenn das mindestens eine Rückhaltelement mit zunehmender Überlastung des Verbindungsmittels zunehmend in Eingriff kommt.

Eine weitere besonders bevorzugte Ausgestaltung sieht vor, dass die Rückhalteelemente zur Einstellung des Drehspiels vorzugsweise über Schraubverbindungen verstellbar angeordnet sind. Damit kann ohne großen Aufwand eine geeignete Abstimmung vorgenommen werden.

Vorteilhafterweise ist der Drehantrieb auf einem Innenlagerring außenliegend angeordnet, so dass auch Vibrationen besser gedämpft werden und eine bessere Dynamik erzielt wird.

In diesem Zusammenhang ist es auch von Vorteil, wenn der Drehantrieb als Schneckengetriebe ausgebildet ist.

Eine weitere bevorzugte Ausführung sieht vor, dass das Rückhalteelement ein mit dem Schneckenrad in Eingriff bringbares Formteil aufweist.

Zu diesem Zweck ist es von besonderem Vorteil, wenn das Schneckenrad eine konkave Umfangskontur aufweist, und wenn das Rückhalteelement mit einer konvex gewölbten Eingriffspartie versehen ist.

Damit im ungünstigsten Fall das austauschbare Formteil, aber nicht das Schneckenrad beschädigt wird, ist es vorteilhaft, wenn das Rückhalteelement durch einen Kunststoffblock oder ggf. durch eine weiche Aluminiumlegierung gebildet ist.

Für eine in mehrerer Hinsicht vorteilhafte Positionierung ist es vorgesehen, dass das Rückhalteelement vorzugsweise an einer von der Arbeitsmaschine abgewandten Seite in ein Getriebegehäuse des Drehantriebs integriert ist.

Um eine sichere Verbindung herzustellen, ist es von Vorteil, wenn das Rückhalteelement über Schrauben an dem Anbauteil abgestützt ist.

Um im Schadensfall auch hohe Belastungen aufnehmen zu können, ist es vorteilhaft, wenn der Kraftfluss zwischen dem Anbauteil und dem Flanschteil im Eingriffszustand des Rückhalteelements bezüglich der Drehachse radial nach außen verlagert wird.

Vorteilhafterweise wird bei Eingriff der Sicherungseinrichtung ein Signal zur Information eines Maschinisten abgegeben. Dadurch kann dieser auch seine Bedienbefehle entsprechend einschränken.

Im Folgenden wird die Erfindung anhand eines in der Zeichnung schematisch dargestellten Ausführungsbeispiels näher erläutert. Es zeigen:
- Fig. 1: einen Bagger mit einem Arbeitsgerät am Baggerausleger und einer Drehvorrichtung dafür in Seitenansicht;
- Fig. 2: eine vergrößerte Schnittdarstellung im Bereich der mit einer mechanischen Sicherungseinrichtung ausgestatteten Drehvorrichtung des Arbeitsgeräts der Fig. 1;
- Fig. 3 und 4: eine weitere Ausführungsform einer Drehvorrichtung mit Sicherungseinrichtung in perspektivischer Ansicht und in einem Axialschnitt;
- Fig. 5: ein Schneckenrad der Drehvorrichtung; und
- Fig. 6: ein mit dem Schneckenrad in Eingriff bringbares Sicherungsteil;
- Fig. 7: eine ausschnittsweise Schnittdarstellung einer geschützt in einem Gehäuse der Drehvorrichtung angeordneten Sicherungseinrichtung.

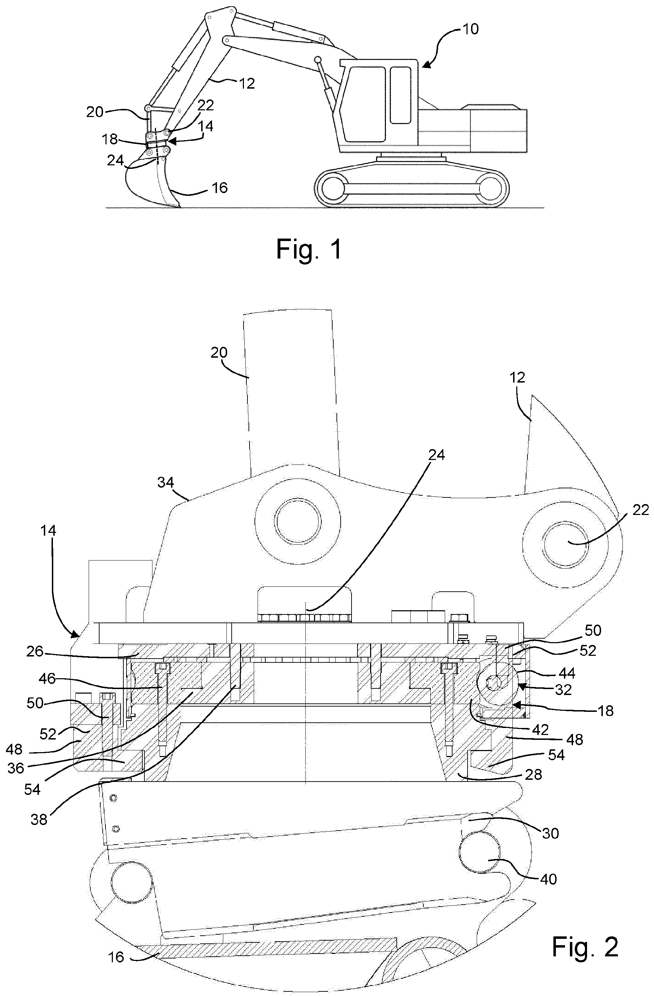

Fig. 1 zeigt einen Bagger 10 als Beispiel einer Arbeitsmaschine mit einem zweiarmigen Stiel bzw. Ausleger 12, einer Drehvorrichtung 14 am freien Ende des Auslegers 12 zur Drehpositionierung einer Baggerschaufel 16 als Arbeitsgerät relativ zu dem Ausleger 12 und einer Sicherungseinrichtung 18 gegen ein ungewolltes Lösen der Baggerschaufel im Bereich der Drehvorrichtung 14.

Eine hydraulische Schwenkkinematik 20 an dem Ausleger 12 ermöglicht ein begrenztes Verschwenken der Baggerschaufel 16 um eine durch das Lagerauge 22 Horizontalachse, während die Drehvorrichtung 14 ein unbegrenztes Drehen der Baggerschaufel 16 um eine Drehachse 24 erlaubt.

Zu diesem Zweck umfasst die Drehvorrichtung 14, wie aus Fig. 2 ersichtlich, eine mit dem Ausleger 12 über die Schwenkkinematik 20 verbundene Anbauplatte 26, einen drehbeweglich bezüglich der Anbauplatte 26 gelagerten Flanschring 28 zum Anbringen der Baggerschaufel 16 über eine Schnellwechselvorrichtung 30 und einen Drehantrieb 32 zur Drehbewegung des Flanschrings 28 um die Drehachse 24.

Die Anbauplatte 26 ist an einer Seite mit einem Koppelglied 34 der Schwenckinematik 20 starr verbunden und trägt an der anderen Seite einen Innenlagerring 36, der über ringförmig verteilte Schrauben 38, die einen Radialabstand R1 zur Drehachse 24 besitzen, drehfest gehalten ist.

Die Schnellwechselvorrichtung 30 ist mit dem Flanschring 28 stirnseitig verschweißt und lässt sich über Bolzen 40 mit der Baggerschaufel 16 oder einem anderen Arbeitsgerät mit geringem Handhabungsaufwand koppeln.

Der Drehantrieb 32 ist als Schneckengetriebe ausgebildet und umfasst ein außen gezahntes Schneckenrad 42 und einer motorisch drehbaren schraubenförmigen Schneckenwelle 44, die in die Zahnlücken des Schneckenrads 42 eingreift. Das Schneckenrad 42 ist radial außenliegend auf dem Innenlagerring 36 gelagert und über ringförmig verteilte Schraubverbindungen 46, die einen Radialabstand R2 zur Drehachse 24 besitzen, axial mit dem Flanschring 28 verbunden.

Die Sicherungseinrichtung 18 umfasst mehrere, beispielsweise drei mechanisch wirkende Rückhaltelemente 48, die um die Drehachse 24 herum verteilt sind. In der Fig. 2 ist das rechts gezeigte Rückhalteelement nur zur Sichtbarmachung in die Schnittebene versetzt. Die Rückhaltelemente 48 können auch auf unterschiedliche Weise ausgebildet sein. Im gezeigten Fall weisen die Rückhalteelemente 48 einen an der Anbauplatte 26 oder einem damit verbundenen Teil mittels Schrauben 50 fixierten Grundkörper 52 und einen den Flanschring 28 an einer zweckmäßig gestuften Außenkontur umgreifenden Fanghaken 54 auf. Die Rückhalteelemente 48 sind mit einstellbarem Axialspiel zwischen dem Flanschring 28 und dem Fanghaken 54 eingebaut und erlauben im Normalbetrieb eine ungestörte Drehbewegung. Im Sicherungsfall, bei Unterschreiten des Axialspiels (beispielsweise im Bereich von 1mm), gelangen die Fanghaken 54 mit dem Flanschring 28 an dessen Stufenfläche in Eingriff und sorgen für eine die Drehbewegung bremsende Reibung. Dies kann dadurch unterstützt werden, dass die Fanghaken 54 mit einem gesondert aufgebrachten Bremsbelag versehen sind (nicht gezeigt).

Der Übergang aus der normalen Freigabestellung in eine die Drehbewegung bremsende Wirkstellung der Rückhalteelemente 48 kann insbesondere dadurch auftreten, dass die Schrauben 38 und die weiteren Schraubverbindungen 46 unter größerer Belastung noch im elastischen Bereich gedehnt werden, wodurch das endlose Drehen proportional zur Überlastung erschwert bis verhindert wird. Im Versagensfall, bei einem Bruch der Schrauben 38, erfolgt ein Formschluss des Flanschrings 28 mit den Fanghaken 54, so dass ein Abfallen des Arbeitsgeräts 16 und alle damit verbundenen Gefährdungen sicher verhindert wird. In diesem Fall kann auch durch einen nicht gezeigten Signalgeber ein Maschinist über die Gefährdungslage informiert werden.

Das gewünschte Axialspiel für den Sicherungseingriff kann über die Schrauben 50 an dem Grundkörper 52 der Rückhaltelemente 48 eingestellt werden. In der Normalstellung erfolgt der axiale Kraftfluss von der Anbauplatte 26 durch die Drehvorrichtung 32 über die Schrauben 38 und Schraubverbindungen 46. Hingegen wird im Sicherungsfall der Kraftfluss in die außenliegenden Rückhalteelemente 48 verlagert, die im Vergleich zu dem Radius R1 der Schrauben 38 auf einem deutlich größeren Radius liegen und somit auch höhere Belastungsmomente aufnehmen können.

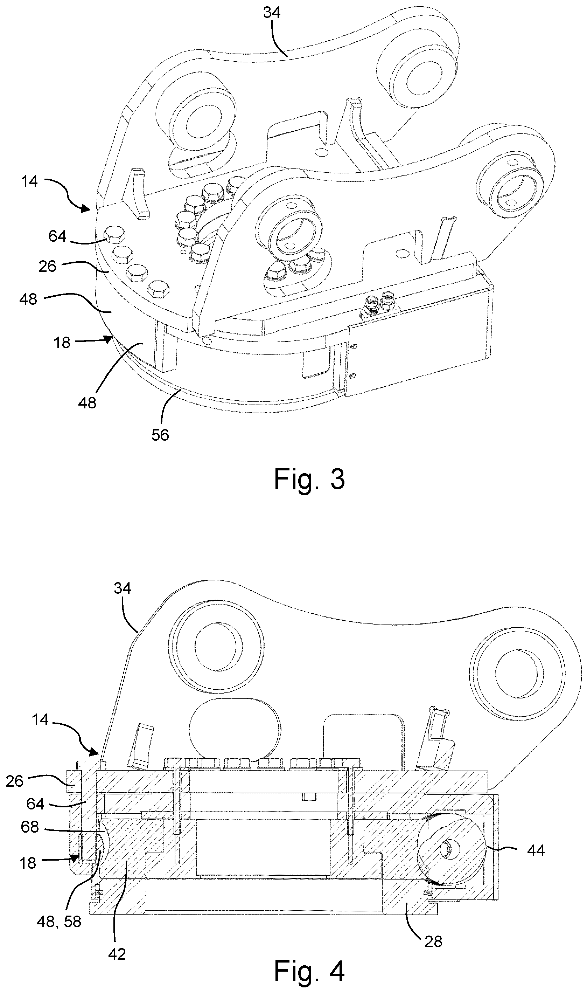

Die Fig. 3 bis 6 zeigen ein weiteres Ausführungsbeispiel einer Drehvorrichtung 14 mit Sicherungseinrichtung 18, wobei gleich oder ähnliche Teile mit denselben Bezugszeichen wie vorstehend erläutert versehen sind.

Die Sicherungseinrichtung 18 umfasst hier ein in das Getriebegehäuse 56 integriertes Rückhalteelement 48, das somit weniger verschmutzungsanfällig ist. Dabei ist eine Anordnung auf der von dem Bagger 10 abgewandten Seite bevorzugt, da dieser Bereich von dem Baggerführer schlechter einsehbar bzw. kontrollierbar ist, während gegenüberliegend Im Sichtfeld zusätzlich auch die oben beschriebenen, eher zu Verschmutzungen neigenden Fanghaken positioniert sein können (nicht gezeigt).

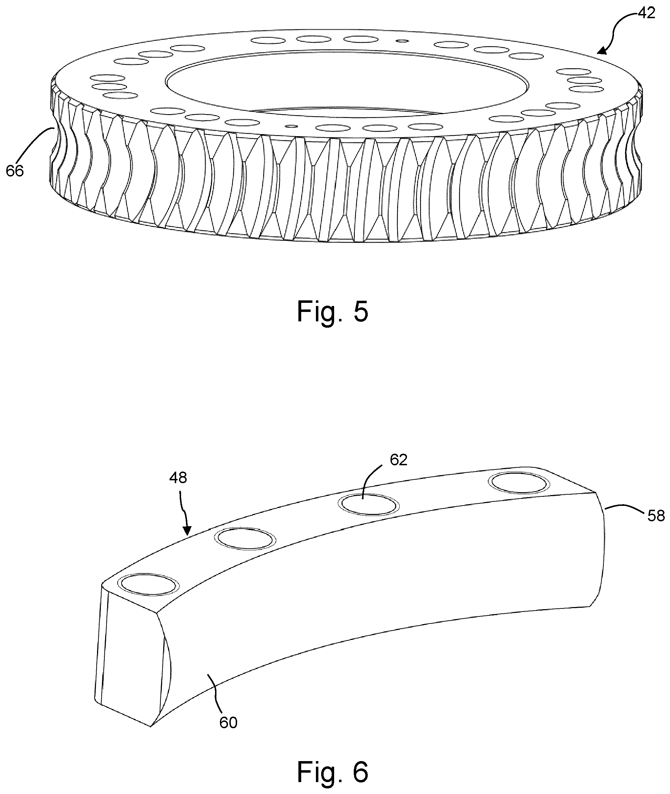

Wie am besten aus Fig. 4 ersichtlich, weist das Rückhalteelement 48 ein mit dem Schneckenrad 42 in Eingriff bringbares Formteil 58 auf. Dieses kann durch einen Kunststoffblock gebildet sein, wie in Fig. 6 dargestellt. Der Kunststoffblock ist mit einer konvex gewölbten Eingriffspartie 60 versehen und besitzt eine Anzahl von Bohrungen 62 für den Einsatz von Halteschrauben 64, die sich an der Anbauplatte 26 abstützen.

Fig. 5 zeigt das umfangsseitig gezahnte Schneckenrad in perspektivischer Ansicht. Daraus ist zu erkennen, dass das Schneckenrad 42 eine konkave Umfangskontur 66 aufweist, in welche die konvex gewölbte Eingriffspartie 60 des Rückhaltelements mit Spiel (Freiraum 68 in Fig. 4) eingreifen kann.

Im Normalbetriebt hat das Schneckenrad 42 genügend Raum, um frei zu drehen. Durch zusätzliche Stellschrauben von außen kann dieses Spiel justiert werden.

Bei elastischer Verformung des gesamten Aufbaus unter Last bewegt sich das Schneckenrad 42 zunehmend nach unten. Dabei verhindert das Formteil 58 zunächst die Möglichkeit des Drehens und hält anschließend im Sicherungsfall das Schneckenrad 42 und den mit ihm verbundenen Flanschring 28 im Gehäuse 56 und an der Anbauplatte 26 fest.

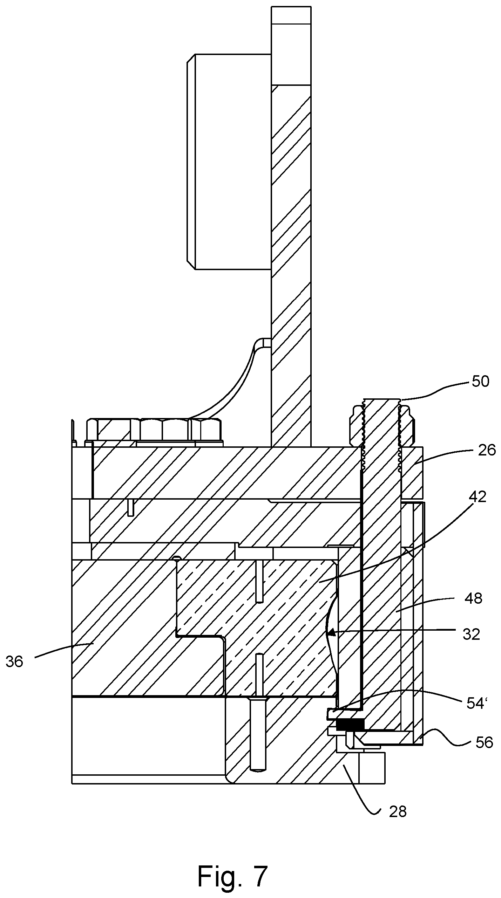

Fig.7 zeigt eine weitere Ausführungsform, bei welcher das Rückhalteelement 48 mittels Schraubverbindung 50 einstellbar an der Anbauplatte 26 befestigt ist und mit einem Fangelement 54' formschlüssig in eine zweckmäßig gestufte Formschlusskontur 68 an der Umfangsseite des Flanschrings 28 eingreift. Das Fangelement 54' stützt mit seinem eingreifenden Ende in Richtung der Drehachse 24 zu der Anbauplatte 26 hin formschlüssig ab und verhindert somit ein vollständiges Abreißen bzw. Abfallen des Flanschrings 28 und des daran befestigten Arbeitsgeräts 16 im Sicherungsfall.

Im Unterschied zu der Ausführungsform nach Fig. 2 ist bei dieser Ausgestaltung das Rückhalteelement 48 innerhalb des Getriebegehäuses 56 angeordnet, in welchem sich der Drehantrieb 32 befindet. Durch diese Anordnung ist das Rückhalteelement 48 zum einen vor äußeren Beschädigungen oder Beeinflussungen geschützt und zum anderen weniger verschmutzungsanfällig. Darüber hinaus sind durch das innen vorhandene Fett die Kontaktflächen von Fanghaken 54 und Flanschring 28 im Normalbetrieb geschmiert.

## Patentansprüche

1. Drehvorrichtung zur Drehpositionierung eines Arbeitsgeräts (16) an einem Ausleger (12) einer Arbeitsmaschine (10), insbesondere eines Baggers, mit einem mit dem Ausleger (12) verbundenen Anbauteil (26), einem vorzugsweise unbegrenzt um eine Drehachse (24) drehbeweglich bezüglich dem Anbauteil (26) gelagerten, zum Anbringen des Arbeitsgeräts (16) ausgebildeten Flanschteil (28) und einem Drehantrieb (32) zur Drehbewegung des Flanschteils (28), **gekennzeichnet durch** eine ein ungewolltes Lösen des Flanschteils (28) verhindernde Sicherungseinrichtung (18), welche mindestens ein bei Unterschreiten eines Spiels für die Drehbewegung mit dem Flanschteil (28) oder einem Teil des Drehantriebs (32) in Eingriff kommendes Rückhalteelement (48) aufweist.

2. Drehvorrichtung nach Anspruch 1, **dadurch gekennzeichnet, dass** das Rückhalteelement (48) einen an dem Anbauteil (26) fixierten Grundkörper (52) aufweist.

3. Drehvorrichtung nach Anspruch 1 oder 2, **dadurch gekennzeichnet, dass** das Rückhaltelement (48) ein in Richtung der Drehachse (24) abstützendes Fangelement (54') besitzt.

4. Drehvorrichtung nach Anspruch 3, **dadurch gekennzeichnet, dass** das Fangelement (54') formschlüssig in ein mit dem Flanschteil (28) fest verbundenes Bauteil oder in eine an dem Flanschteil (28) ausgebildete Formschlusskontur (68) eingreift.

5. Drehvorrichtung nach einem der Ansprüche 1 bis 4, **dadurch gekennzeichnet, dass** mehrere Rückhalteelemente (48) im Winkelabstand zueinander um die Drehachse (24) des Flanschteils (28) herum verteilt angeordnet sind.

6. Drehvorrichtung nach einem der Ansprüche 1 bis 5, **dadurch gekennzeichnet, dass** das Rückhalteelement (48) aus einer Freigabestellung in eine die Drehbewegung bremsende Reibstellung gelangt.

7. Drehvorrichtung nach einem der Ansprüche 1 bis 6, **dadurch gekennzeichnet, dass** das Rückhalteelement (48) einen gesondert aufgebrachten Bremsbelag aufweist.

8. Drehvorrichtung nach einem der Ansprüche 1 bis 7, **dadurch gekennzeichnet, dass** das Flanschteil (28) über Verbindungsmittel (38,46) axial an dem Drehantrieb (32) gehalten ist.

9. Drehvorrichtung nach Anspruch 8, **dadurch gekennzeichnet, dass** das mindestens eine Rückhalteelement (48) mit zunehmender Belastung der Verbindungsmittel (38,46) zunehmend in Eingriff kommt.

10. Drehvorrichtung nach Anspruch 8 oder 9, **dadurch gekennzeichnet, dass** das mindestens eine Rückhalteelement (48) bei Bruch der Verbindungsmittel (38,46) das Flanschteil (28) und das damit verbundene Arbeitsgerät (16) gegen Abfallen festhält.

11. Drehvorrichtung nach einem der Ansprüche 1 bis 10, **dadurch gekennzeichnet, dass** das Rückhalteelement (48) zur Einstellung des Spiels vorzugsweise über Schraubverbindungen (50) verstellbar angeordnet ist.

12. Drehvorrichtung nach einem der Ansprüche 1 bis 11, **dadurch gekennzeichnet, dass** der Drehantrieb (32) auf einem Innenlagerring (36) außenliegend angeordnet ist.

13. Drehvorrichtung nach einem der Ansprüche 1 bis 12, **dadurch gekennzeichnet, dass** der Kraftfluss zwischen dem Anbauteil (26) und dem Flanschteil (28) im Eingriffszustand des mindestens einen Rückhalteelements (48) bezüglich der Drehachse (24) radial nach außen verlagert wird.

14. Drehvorrichtung nach einem der Ansprüche 1 bis 13, **dadurch gekennzeichnet, dass** der Drehantrieb (32) als Schneckengetriebe (42,44) ausgebildet ist, wobei das Schneckengetriebe ein außen gezahntes Schneckenrad (42) umfasst.

15. Drehvorrichtung nach einem der Ansprüche 1 bis 14, **dadurch gekennzeichnet, dass** das Rückhalteelement (48) vorzugsweise an einer von der Arbeitsmaschine (10) abgewandten Seite in ein Getriebegehäuse des Drehantriebs (32) integriert ist.

## Claims

1. Rotating apparatus for rotary positioning of a work tool (16) on a boom (12) of a work machine (10), in particular an excavator, comprising an attachment part (26) connected to the boom (12), a flange part (28) which is mounted so as to rotate around an axis of rotation (24) relative to the attachment part (26) preferably without limitation and is designed for mounting the work tool (16), and a rotary drive (32) for the rotary movement of the flange part (28), **characterized by** a safety device (18) which prevents undesired loosening of the flange part (28), which safety device has at least one retaining element (48) which comes into engagement with the flange part (28) or with part of a rotary drive (32) when a clearance for the rotary movement is not met.

2. Rotating apparatus according to claim 1, **characterized in that** the retaining element (48) has a main body (52) which is fixed to the attachment part (26).

3. Rotating apparatus according to either claim 1 or claim 2, **characterized in that** the retaining element (48) has a catching element (54') that provides support in the direction of the axis of rotation (24).

4. Rotating apparatus according to claim 3, **characterized in that** the catching element (54') engages in a form-fitting manner in a component which is rigidly connected to the flange part (28) or in a form-fitting contour (68) formed on the flange part (28).

5. Rotating apparatus according to any of claims 1 to 4,
**characterized in that** a plurality of retaining elements (48) are arranged at an angular distance from one another so as to be distributed around the axis of rotation (24) of the flange part (28).

6. Rotating apparatus according to any of claims 1 to 5,
**characterized in that** the retaining element (48) moves from a release position into a friction position braking the rotary movement.

7. Rotating apparatus according to any of claims 1 to 6, **characterized in that** the retaining element (48) has a separately applied brake pad.

8. Rotating apparatus according to any of claims 1 to 7,
**characterized in that** the flange part (28) is held axially on the rotary drive (32) via connecting means (38, 46).

9. Rotating apparatus according to claim 8, **characterized in that** the at least one retaining element (48) increasingly engages with increasing load on the connecting means (38, 46).

10. Rotating apparatus according to any of claims 8 or 9,
**characterized in that** the at least one retaining element (48) which, in the event of the connecting means (38, 46) breaking, holds the flange part (28) and the working device (16) connected to it in place to prevent them from falling off.

11. Rotating apparatus according to any of claims 1 to 10,
**characterized in that** the retaining element (48) is arranged so as to be adjustable for setting the clearance, preferably via screw connections (50).

12. Rotating apparatus according to any of claims 1 to 11,
**characterized in that** the rotary drive (32) is arranged externally on an inner bearing ring (36).

13. Rotating apparatus according to any of claims 1 to 12,
**characterized in that** the force flow between the attachment part (26) and the flange part (28) is displaced radially outward with respect to the axis of rotation (24) in the engaged state of the at least one retaining element (48).

14. Rotating apparatus according to claims 1 to 13, **characterized in that** the rotary drive (32) is designed as a worm gear (42, 44), the worm gear having an externally toothed worm wheel (42).

15. Rotating apparatus according to claims 1 to 14, **characterized in that** the retaining element (48) is integrated into a gear housing of the rotary drive (32), preferably on a side facing away from the work machine (10).

## Revendications

1. Dispositif de rotation pour le positionnement rotatif d'un appareil de travail (16) sur un bras (12) d'une machine de travail (10), en particulier d'un excavateur, comportant une pièce de montage (26) reliée au bras (12), une pièce de bride (28) montée avec une mobilité en rotation de préférence sans limitation autour d'un axe de rotation (24) relatif la pièce de montage (26) et formée pour l'installation de l'appareil de travail (16), et un entraînement rotatif (32) pour le mouvement de rotation de la pièce de bride (28),
**caractérisé par** un moyen de blocage (18) empêchant un détachement involontaire de la pièce de bride (28), lequel moyen de blocage présente au moins un élément de retenue (48) venant en prise avec la pièce de bride (28) ou avec une partie de l'entraînement rotatif (32) lors de la non-atteinte d'un jeu pour le mouvement de rotation.

2. Dispositif de rotation selon la revendication 1, **caractérisé en ce que** l'élément de retenue (48) présente un corps de base (52) fixé sur la pièce de montage (26).

3. Dispositif de rotation selon la revendication 1 ou 2,
**caractérisé en ce que** l'élément de retenue (48) comporte un élément de capture (54') qui assure un appui dans la direction de l'axe de rotation (24).

4. Dispositif de rotation selon la revendication 3, **caractérisé en ce que** l'élément de capture (54') s'engage par complémentarité de forme dans un composant solidement relié à la partie de bride (28) ou dans un contour de complémentarité de forme (68) formé sur la partie de bride (28).

5. Dispositif de rotation selon l'une des revendications 1 à 4,
**caractérisé en ce que** plusieurs éléments de retenue (48) sont disposés de manière à être répartis à une distance angulaire les uns des autres autour de l'axe de rotation (24) de la pièce de bride (28).

6. Dispositif de rotation selon l'une des revendications 1 à 5,
**caractérisé en ce que** l'élément de retenue (48) passe d'une position de libération à une position de frottement freinant le mouvement de rotation.

7. Dispositif de rotation selon l'une des revendications 1 à 6,
**caractérisé en ce que** l'élément de retenue (48) présente une garniture de frein mise en place séparément.

8. Dispositif de rotation selon l'une des revendications 1 à 7,
**caractérisé en ce que** la pièce de bride (28) est maintenue axialement sur l'entraînement rotatif (32) par l'intermédiaire de moyens de liaison (38, 46).

9. Dispositif de rotation selon la revendication 8, **caractérisé en ce que** l'au moins un élément de retenue (48) vient en prise de manière croissante avec une charge croissante des moyens de liaison (38, 46).

10. Dispositif de rotation selon la revendication 8 ou 9,
**caractérisé en ce que** l'au moins un élément de retenue (48) en cas de rupture des moyens de liaison (38, 46), maintient la pièce de bride (28) et l'outil de l'appareil de travail (16), qui y est relié afin qu'ils ne tombent pas.

11. Dispositif de rotation selon l'une des revendications 1 à 10,
**caractérisé en ce que** l'élément de retenue (48) est disposé de manière à pouvoir être réglé pour le réglage du jeu, de préférence par l'intermédiaire de liaisons par vis (50).

12. Dispositif de rotation selon l'une des revendications 1 à 11,
**caractérisé en ce que** l'entraînement rotatif (32) est disposé à l'extérieur sur une bague de roulement interne (36).

13. Dispositif de rotation selon l'une des revendications 1 à 12,
**caractérisé en ce que** le flux de force entre la pièce de montage (26) et la pièce de bride (28) est déplacé radialement vers l'extérieur par rapport à l'axe de rotation (24) dans l'état de mise en prise de l'au moins un élément de retenue (48).

14. Dispositif de rotation selon les revendications 1 à 13,
**caractérisé en ce que** l'entraînement rotatif (32) est formé en tant qu'engrenage à vis sans fin (42, 44), dans lequel l'engrenage à vis sans fin comprend une roue tangente (42) à denture extérieure.

15. Dispositif de rotation selon les revendications 1 à 14,
**caractérisé en ce que** l'élément de retenue (48) est intégré dans un boîtier d'engrenage de l'entraînement rotatif (32), de préférence sur un côté opposé à la machine de travail (10).
